# EUROPÄISCHE PATENTANMELDUNG

(11) **EP 3 244 360 A1**
(43) Veröffentlichungstag der Anmeldung: **15.11.2017**
(21) Anmeldenummer: 16169378.3
(22) Anmeldetag: 12.05.2016
(51) Int. Cl.: G06Q 20/38, G06Q 20/40, G06Q 20/20

(54) **VERFAHREN ZUR REGISTRIERUNG VON GERÄTEN, INSBESONDERE VON ZUGANGSKONTROLLVORRICHTUNGEN ODER BEZAHL- BZW. VERKAUFSAUTOMATEN BEI EINEM SERVER EINES SYSTEMS, WELCHES MEHRERE DERARTIGE GERÄTE UMFASST**

(71) Anmelder: SKIDATA AG, 5083 Grödig/Salzburg (AT)
(72) Erfinder: Maurer, Sebastian, 9020 Klagenfurt am Wörthersee (AT); Ismailov, Ramiz, 9020 Klagenfurt am Wörthersee (AT); Grafl, Michael, 9020 Klagenfurt am Wörthersee (AT); Kerschbaumer, Andreas, 9020 Klagenfurt am Wörthersee (AT)
(74) Vertreter: Karakatsanis, Georgios

(57) **Zusammenfassung**

Es wird ein Verfahren zur Registrierung von Geräten (2), insbesondere von Zugangskontrollvorrichtungen oder Bezahl- bzw. Verkaufsautomaten bei einem Server (3) eines Systems, welches mehrere derartige Geräte umfasst, vorgeschlagen, im Rahmen dessen das zu registrierende Gerät (2) einen öffentlichen und einen privaten Schlüssel zur asymmetrischen Kryptographie generiert, wobei anschließend das Gerät (2) einen mit dem privaten Schlüssel des Gerätes signierten Registrierungs-Request an den Server (3) übermittelt, enthaltend zumindest eine Geräte-ID, den öffentlichen Schlüssel des Gerätes (2) und Zugangsdaten eines Technikers, welcher die Herstellung einer Verbindung zwischen dem Gerät (2) und dem Server (3) autorisiert, wobei der Server (3) den Registrierungs-Request mit dem öffentlichen Schlüssel des Gerätes verifiziert und nach erfolgter Verifizierung das zu registrierende Gerät (2) einem "Device Reception Room" im Speicher des Servers (3) zuordnet, wobei solange das Gerät (2) dem Device Reception Room zugeordnet ist, keine operative Kommunikation mit dem Server (3) stattfindet, wobei anschließend das Gerät (2) im Device Reception Room durch einen Techniker, der sich beim Server (3) mit seinen Zugangsdaten einloggt, zum Betrieb und zur operativen Kommunikation freigegeben, wird, wobei das Gerät einem Speicherbereich des Servers (3) für zum Betrieb freigegebene Geräte zugeordnet wird und wobei eine Mitteilung der Registrierung an das Gerät (2) übermittelt wird.

## Beschreibung

Die vorliegende Erfindung bezieht sich auf ein Verfahren zur Registrierung von Geräten, insbesondere von Zugangskontrollvorrichtungen oder Bezahl- bzw. Verkaufsautomaten bei einem Server eines Systems, welches mehrere derartige Geräte umfasst, gemäß dem Oberbegriff des Patentanspruchs 1.

Verfahren zur Registrierung von Geräten, auch Trust Establishment of Remote Devices genannt, sind aus dem Stand der Technik bekannt. Zum einen ist bekannt, einen gemeinsamen geheimen Schlüssel (Shared Secret Key) zu verwenden. Der gemeinsame geheime Schlüssel ist auf einem zu registrierenden Gerät vorinstalliert bzw. konfiguriert, wobei zum Zweck der Registrierung des Gerätes zunächst ein Techniker auf einem Server des Systems einen Datensatz für dieses Gerät enthaltend eine Geräte-ID, eine Freigabe zum Betrieb und den gemeinsamen geheimen Schlüssel anlegt. Die Geräte-ID ist eine eindeutige Kennung für das Gerät und kann von Hardware-Komponenten des Gerätes abhängen oder auch eine beliebige, eindeutige Zeichenkette sein.

Anschließend wird das Gerät mit dem Server verbunden, wobei eine Authentifizierung mittels der Geräte-ID und des gemeinsamen geheimen Schlüssels erfolgt; nach erfolgter Authentifizierung wird das Gerät zur operativen Kommunikation mit dem Server autorisiert. Nach der ersten Interaktion und Authentifizierung können weitere Zugangsdaten generiert werden, um die Sicherheit der operativen Kommunikation mit dem Server zu erhöhen, insbesondere, wenn der gemeinsame geheime Schlüssel unbefugten Personen bekannt ist.

Dieses Verfahren weist jedoch den Nachteil auf, dass der gemeinsame geheime Schlüssel auf dem Gerät vorinstalliert sein muss, was entweder mittels einer automatischen Installation eines gemeinsamen geheimen Schlüssels auf allen Geräten oder mittels einer manuellen Installation bzw. Konfiguration eines für jedes Gerät unterschiedlichen gemeinsamen geheimen Schlüssels erfolgt. Ein weiterer Nachteil dieses Verfahrens besteht darin, dass ein Techniker die Geräte-ID eines Gerätes kennen muss, um den entsprechenden Datensatz auf dem Server zu Zweck der Registrierung anzulegen. Zu diesem Zweck wird in der Regel das zu registrierende Gerät gestartet, um die Geräte-ID zu erhalten.

Des Weiteren ist aus dem Stand der Technik bekannt, die Geräteregistrierung mittels einer sogenannten Public Key Infrastructure (PKI) durchzuführen, wobei in diesem Fall ein von einer Zertifizierungsstelle signiertes Geräte-Zertifikat auf dem Gerät gespeichert wird. Basierend auf diesem Zertifikat kann die Identifizierung und Authentifizierung eines Gerätes vom Server erfolgen, wobei sich hierbei die Komplexität, insbesondere hinsichtlich der Erneuerung der Zertifikate und der Erstellung und Verwaltung von Zertifikatssperrlisten als nachteilig erweist. In der Regel kommunizieren nach dem Stand der Technik Geräte und Server über eine gesicherte Verbindung. Dies gilt für die oben beschriebenen Verfahren aus dem Stand der Technik und für die vorliegende Erfindung gleichermaßen.

Der vorliegenden Erfindung liegt die Aufgabe zugrunde, ein Verfahren zur Registrierung von Geräten, insbesondere von Zugangskontrollvorrichtungen oder Bezahl- bzw. Verkaufsautomaten bei einem Server eines Systems, welches mehrere derartige Geräte umfasst, anzugeben, durch dessen Durchführung die erwähnten Nachteile des Standes der Technik vermieden werden. Insbesondere soll im vorliegenden Verfahren, im Gegensatz zu einer PKI, eine Signierung des öffentlichen Schlüssels des Geräts durch eine Zertifizierungsstelle sowie die Verwaltung von Zertifikatssperrlisten nicht erforderlich sein. Des Weiteren soll die Notwendigkeit einer Vorkonfiguration am Gerät oder am Server vor Beginn des Registrierungsverfahrens entfallen.

Diese Aufgabe wird durch die Merkmale des Patentanspruchs 1 gelöst. Weitere Ausgestaltungen und Vorteile gehen aus den Unteransprüchen hervor.

Demnach wird ein Verfahren zur Registrierung von Geräten, insbesondere von Zugangskontrollvorrichtungen oder Bezahl- bzw. Verkaufsautomaten bei einem Server eines Systems, welches mehrere derartige Geräte umfasst, vorgeschlagen, im Rahmen dessen das zu registrierende Gerät einen öffentlichen und einen privaten Schlüssel zur asymmetrischen Kryptographie generiert, wobei anschließend das Gerät einen mit dem privaten Schlüssel des Gerätes signierten Registrierungs-Request an den Server übermittelt, enthaltend zumindest die Geräte-ID, den generierten öffentlichen Schlüssel des Gerätes und Zugangsdaten eines Technikers, welcher die Herstellung einer Verbindung zwischen dem Gerät und dem Server autorisiert. Die Zugangsdaten des Technikers können beispielsweise vom Techniker nach Aufforderung durch das Gerät an das Gerät übermittelt werden oder vor Beginn des Registrierungsprozesses vom Techniker eingegeben werden.

Gemäß der Erfindung verifiziert der Server den Registrierungs-Request mit dem öffentlichen Schlüssel des Gerätes um festzustellen, ob das Gerät über den entsprechenden privaten Schlüssel verfügt und ordnet das zu registrierende Gerät nach erfolgter Verifizierung einem sogenannten "Device Reception Room", d.h. einem virtuellen Warteraum im Speicher des Servers zu. Solange das Gerät dem Device Reception Room zugeordnet ist, kann keine operative Kommunikation mit dem Server stattfinden. Anschließend wird das Gerät im Device Reception Room durch einen Techniker, der sich beim Server mit seinen Zugangsdaten einloggt, zum Betrieb und zur operativen Kommunikation freigegeben, wobei das Gerät einem Speicherbereich des Servers für zum Betrieb freigegebene Geräte, einem so genannten operativen Bereich, zugeordnet wird und wobei eine Mitteilung der Registrierung an das Gerät, enthaltend das Akzeptieren des öffentlichen Schlüssels durch den Server und die Freigabe zum Betrieb und zur operativen Kommunikation generiert wird.

Alternativ zur Übermittlung der Mitteilung der Registrierung unmittelbar nach der Registrierung kann diese nach einem Neustart des Gerätes bzw. nach Herstellung einer neuen Verbindung zwischen dem Gerät und dem Server übermittelt werden, wobei sich das Gerät mittels einer Signatur authentifiziert, die im Server mittels des öffentlichen Schlüssels verifiziert wird.

Vor der Freigabe zum Betrieb und zur operativen Kommunikation kann der Techniker das Gerät anhand von Vorlagen der Konfiguration weiterer Geräte des Systems konfigurieren oder eine neue Konfiguration eingeben bzw. dem Gerät eine Konfiguration zuordnen.

Wenn sich das Gerät nunmehr im operativen Bereich befindet, d.h. nach erfolgter Registrierung des Gerätes, werden die Mitteilungen des Gerätes an den Server mit dem privaten Schlüssel signiert, wobei der Server eine Verifikation der Mitteilungen mittels des öffentlichen Schlüssels des Gerätes durchführt. Alternativ dazu kann der Server dem Gerät Zugangsdaten für die operative Kommunikation mit der Mitteilung der Registrierung an das Gerät übermitteln.

Im Rahmen einer Weiterbildung der Erfindung kann der Registrierungs-Request des Gerätes nach dem Stand der Technik ein Nonce enthalten, um Replay-Angriffe zu verhindern. Ferner kann der Request nach dem Stand der Technik zur Verhinderung von Replay-Angriffen eine so genannte Challenge enthalten, der vom Server generiert wird. Ferner kann der Registrierungs-Request Informationen enthalten, welche eine Identifizierung des Gerätes im Device Reception Room ermöglichen, beispielsweise eine Mandanten-ID für den Fall eines Multi-Mandanten-fähigen Systems.

Des Weiteren kann im Rahmen weiterer Ausgestaltungen der Techniker vor der Freigabe des Gerätes zum Betrieb und zur operativen Kommunikation weitere Daten einsehen, beispielsweise den Namen des Technikers, der die Herstellung einer Verbindung zwischen dem Gerät und dem Server autorisiert hat, den Zeitpunkt des vom Gerät generierten Registrierungs-Requests und Daten des Gerätes.

Im Rahmen einer weiteren Ausgestaltung des erfindungsgemäßen Verfahrens können der öffentliche und der private Schlüssel, die im zu registrierenden Gerät generiert werden, für eine vorgegebene Zeitspanne gültig sein oder aus Sicherheitsgründen durch ein neues Schlüsselpaar ersetzt werden, wobei dies vom Gerät oder vom Server initiiert wird. Anschließend werden im Gerät ein neuer privater und ein neuer öffentlicher Schlüssel generiert, wobei der neue öffentliche Schlüssel an den Server übermittelt wird und diese Mitteilung mit dem alten privaten Schlüssel signiert wird. Nach Verifikation der Signatur durch den Server wird der alte öffentliche Schlüssel durch den neuen vom Gerät generierten öffentlichen Schlüssel ersetzt, wobei die operative Kommunikation mit dem neuen Schlüsselpaar durchgeführt wird.

Wenn ein Schlüsselpaar gesperrt oder widerrufen werden soll, was beispielsweise der Fall sein kann, wenn ein Gerät gestohlen oder gehackt worden ist, wird durch einen Techniker auf dem Server der öffentliche Schlüssel des Gerätes deaktiviert, wobei das Gerät dem Device Reception Room, d.h. dem virtuellen Warteraum im Speicher des Servers zugeordnet wird. Solange das Gerät dem Device Reception Room zugeordnet ist, kann keine operative Kommunikation mit dem Server stattfinden. Wenn die Sicherheitsprobleme behoben worden sind, wird das Gerät bzw. ein neues Gerät, wie bereits ausgeführt, durch Generieren eines öffentlichen und eines privaten Schlüssels und Übermitteln eines mit dem privaten Schlüssel des Gerätes signierten Registrierungs-Requests an den Server erneut registriert.

Die Erfindung wird im Folgenden anhand der beigefügten Figuren beispielhaft näher erläutert. Es zeigen:
Figur 1: ein Flussdiagramm zur Veranschaulichung des Registrierungsprozesses gemäß der Erfindung; und
Figur 2: ein Flussdiagramm zur Veranschaulichung der Vorgehensweise zum Generieren eines neuen öffentlichen und privaten Schlüssels gemäß der Erfindung.

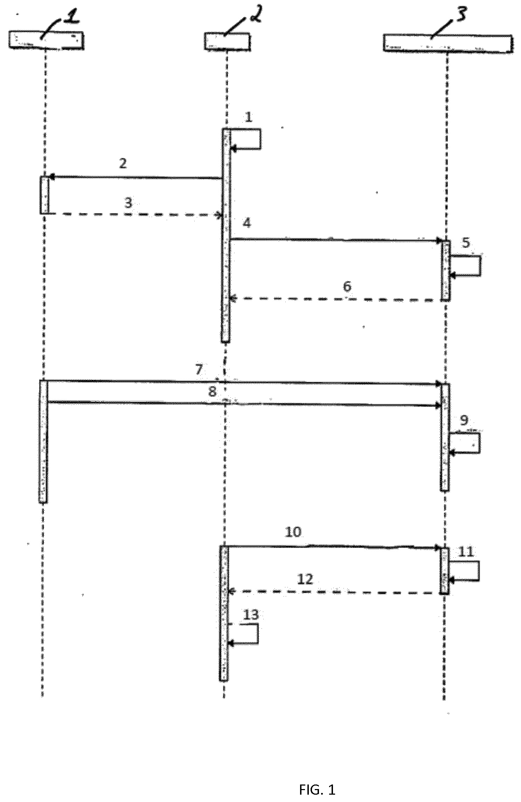

In Figur 1 ist mit 1 ein Techniker bezeichnet, wobei ein bei einem Server eines Systems, welches mehrere derartige Geräte umfasst zu registrierendes Gerät mit 2 und der Server mit 3 bezeichnet sind. Das Gerät 2 kann beispielsweise eine Zugangskontrollvorrichtung eines Zugangskontrollsystems, beispielsweise eines Zugangskontrollsystems in einem Skigebiet, oder ein Bezahl- bzw. Verkaufsautomat sein.

Zu Beginn des Verfahrens generiert das zu registrierende Gerät 2 einen öffentlichen und einen privaten Schlüssel zur asymmetrischen Kryptographie (Schritt 1), und fordert von einem eingeloggten Techniker seine Zugangsdaten (Schritt 2), wobei nach Erhalt der Zugangsdaten (Schritt 3) das Gerät 2 einen mit dem privaten Schlüssel des Gerätes signiertem Registrierungs-Request an den Server 3 übermittelt (Schritt 4), wobei der Registrierungs-Request zumindest eine eindeutige Geräte-ID, den öffentlichen Schlüssel des Gerätes und die Zugangsdaten des Technikers 1 enthält. Die Zugangsdaten dienen der Authentifizierung des Registrierungs-Requests; durch die Zugangsdaten ist die Herstellung einer Verbindung zum Server 3 und somit die Registrierung autorisiert.

In einem nächsten Schritt (Schritt 5) wird der Registrierungs-Request vom Server 3 mit dem öffentlichen Schlüssel des Gerätes 2 verifiziert, wobei nach erfolgter Verifizierung das zu registrierende Gerät 2 einem "Device Reception Room", d.h. einem virtuellen Warteraum im Speicher des Servers 3 zugeordnet wird. Anschließend wird vom Server 3 die Verifizierung an das Gerät 2 übermittelt (Schritt 6).

Anschließend wird das Gerät 2 im Device Reception Room durch einen Techniker, der sich beim Server 3 mit seinen Zugangsdaten einloggt (Schritt 7), zum Betrieb und zur operativen Kommunikation freigegeben (Schritt 8), wobei das Gerät einem Speicherbereich des Servers 3 für zum Betrieb freigegebene Geräte, einem so genannten operativen Bereich, zugeordnet wird (Schritt 9).

Bei dem gezeigten Beispiel wird eine erneute Verbindung zwischen dem Gerät 2 und dem Server 3 hergestellt, wobei sich das Gerät 2 durch eine Signatur authentisiert (Schritt 10), wobei anschließend nach Verifizierung der Signatur mittels des öffentlichen Schlüssels im Server 3 (Schritt 11) eine Mitteilung der erfolgten Registrierung an das Gerät 2 übermittelt wird (Schritt 12), welches nunmehr zum Betrieb und zur operativen Kommunikation (Schritt 13) freigegeben ist.

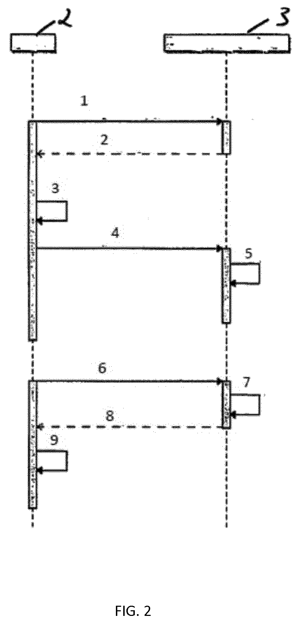

Gegenstand der Figur 2 ist ein Flussdiagramm zur Veranschaulichung einer beispielhaften Vorgehensweise zum Generieren eines neuen öffentlichen und privaten Schlüssels eines registrierten Gerätes 2.

Bei dem gezeigten Beispiel wird das Generieren eines neuen Schlüsselpaars vom Server 3 angefordert (Schritt 2) nachdem eine Verbindung zwischen dem Gerät 2 und dem Server 3 hergestellt ist (Schritt 1). Anschließend werden im Gerät 2 ein neuer privater und ein neuer öffentlicher Schlüssel generiert (Schritt 3), wobei der neue öffentliche Schlüssel an den Server 3 übermittelt wird und diese Mitteilung mit dem alten privaten Schlüssel signiert wird (Schritt 4). Nach Verifikation der Signatur durch den Server 3 mittels des alten öffentlichen Schlüssels wird der alte öffentliche Schlüssel durch den neuen vom Gerät 2 generierten öffentlichen Schlüssel ersetzt (Schritt 5), wobei die operative Kommunikation mit dem neuen Schlüsselpaar durchgeführt wird (Schritte 6, 7, 8, 9). Bei dem gezeigten Beispiel wird nachdem im Server 3 der alte öffentliche Schlüssel durch den neuen öffentlichen Schlüssel ersetzt worden ist, eine Verbindung zwischen dem Gerät 2 und dem Server 3 hergestellt, wobei das Gerät zur Authentisierung eine mit dem neuen Schlüsselpaar erstellte Signatur benutzt (Schritt 6), wobei der Server sie Signatur mittels des neuen öffentlichen Schlüssels verifiziert (Schritt 7) und die erfolgte Verifizierung bestätigt (Schritt 8), und wobei anschließend das Gerät 2 zum Betrieb und zur operativen Kommunikation (Schritt 9) freigegeben ist.

## Patentansprüche

1. Verfahren zur Registrierung von Geräten (2), insbesondere von Zugangskontrollvorrichtungen oder Bezahl- bzw. Verkaufsautomaten bei einem Server (3) eines Systems, welches mehrere derartige Geräte umfasst, **dadurch gekennzeichnet, dass** das zu registrierende Gerät (2) einen öffentlichen und einen privaten Schlüssel zur asymmetrischen Kryptographie generiert, wobei anschließend das Gerät (2) einen mit dem privaten Schlüssel des Gerätes signierten Registrierungs-Request an den Server (3) übermittelt, enthaltend zumindest eine Geräte-ID, den öffentlichen Schlüssel des Gerätes (2) und Zugangsdaten eines Technikers, welcher die Herstellung einer Verbindung zwischen dem Gerät (2) und dem Server (3) autorisiert, wobei der Server (3) den Registrierungs-Request mit dem öffentlichen Schlüssel des Gerätes verifiziert und nach erfolgter Verifizierung das zu registrierende Gerät (2) einem "Device Reception Room" im Speicher des Servers (3) zuordnet, wobei solange das Gerät (2) dem Device Reception Room zugeordnet ist, keine operative Kommunikation mit dem Server (3) stattfindet, wobei anschließend das Gerät (2) im Device Reception Room durch einen Techniker, der sich beim Server (3) mit seinen Zugangsdaten einloggt, zum Betrieb und zur operativen Kommunikation freigegeben wird, wobei das Gerät einem Speicherbereich des Servers (3) für zum Betrieb freigegebene Geräte zugeordnet wird und wobei eine Mitteilung der Registrierung an das Gerät (2) übermittelt wird.

2. Verfahren nach Anspruch 1, **dadurch gekennzeichnet, dass** die Mitteilung der Registrierung an das Gerät (2), enthaltend das Akzeptieren des öffentlichen Schlüssels durch den Server (3) und die Freigabe zum Betrieb und zur operativen Kommunikation unmittelbar nach erfolgter Registrierung an das Gerät übermittelt wird oder nach einem Neustart des Gerätes (2) bzw. nach Herstellung einer neuen Verbindung zwischen dem Gerät (2) und dem Server (3) übermittelt wird.

3. Verfahren nach Anspruch 1 oder 2, **dadurch gekennzeichnet**, nach erfolgter Registrierung des Gerätes die Mitteilungen des Gerätes (2) an den Server (3) mit dem privaten Schlüssel signiert werden, wobei der Server (3) eine Verifikation der Mitteilungen mittels des öffentlichen Schlüssels des Gerätes durchführt oder dass der Server (3) dem Gerät (2) Zugangsdaten für die operative Kommunikation mit der Mitteilung der Registrierung an das Gerät (2) übermittelt.

4. Verfahren nach Anspruch 1, 2 oder 3, **dadurch gekennzeichnet, dass** vor der Freigabe zum Betrieb und zur operativen Kommunikation das Gerät (2) anhand von Vorlagen der Konfiguration weiterer Geräte des Systems konfiguriert wird oder dem Gerät (2) eine neue Konfiguration zugeordnet wird.

5. Verfahren nach einem der vorangehenden Ansprüche, **dadurch gekennzeichnet, dass** der öffentliche und der private Schlüssel, die im zu registrierenden Gerät (2) generiert werden, für eine vorgegebene Zeitspanne gültig sind oder aus Sicherheitsgründen durch ein neues Schlüsselpaar ersetzt werden, wobei das Generieren eines neuen Schlüsselpaars vom Gerät (2) oder vom Server (3) initiiert wird, wobei im Gerät (2) ein neuer privater und ein neuer öffentlicher Schlüssel generiert werden, wobei der neue öffentliche Schlüssel an den Server (3) übermittelt wird und diese Mitteilung mit dem alten privaten Schlüssel signiert wird, wobei nach Verifikation der Signatur durch den Server (3) der alte öffentliche Schlüssel durch den neuen vom Gerät (2) generierten öffentlichen Schlüssel ersetzt wird, wobei die operative Kommunikation mit dem neuen Schlüsselpaar durchgeführt wird.
